# EUROPEAN PATENT APPLICATION

(11) **EP 0 599 606 A2**
(43) Date of publication of application: **01.06.1994**
(21) Application number: 93309340.3
(22) Date of filing: 23.11.1993
(51) Int. Cl.: G06F 11/22, G03G 15/00

(54) **Interactive diagnostic data transfer system for remote diagnostics**

(30) Priority: 24.11.1992 US 981047
(71) Applicant: XEROX CORPORATION, Rochester New York 14644 (US)
(72) Inventor: Siegel, Robert P., Penfeild, New York 14526 (US); Marder, Daniel Spencer, Penfield, New York 14526 (US)
(74) Representative: Hill, Cecilia Ann

(57) **Abstract**

The effectiveness of a RIC remote diagnostics system is improved by reducing the quantity of data required to perform diagnostics. More specifically, a machine (10) being remotely monitored acquires a data summary of key performance parameters and transmits the data summary to a remote server (95). The remote server analyzes the data summary and can query for more specific non- volatile memory data in specific areas if the remote server determines that further information is needed to complete the diagnostics. The system involves interaction between low level diagnostic software (120) associated with the machine and high level diagnostic software (140) located at the remote site (70).

## Description

The present invention relates to a system for improving the effectiveness of a remote diagnostics system by selectively providing data required to perform diagnostics.

In current practice, a Remote Interactive Communication (RIC) system is used for performing remote, predictive diagnostics as a key task. This diagnosis takes place subsequent to a modem transmission during which a unidirectional transfer of data takes place from the machine to the remote server. During this session, a complete copy of the machine's NVM is transmitted to the remote server which analyzes the data and determines if a service call is required. This predictive diagnosis converts unscheduled maintenance calls to initiated calls.

U.S. Patent No. 5,038,319 to Carter et al. discloses a system for recording and remotely accessing operating data in a reproduction machine for use in analyzing machine faults and software crashes. The system may use a RIC. When the machine is operating within specific operating parameters, the physical data relating thereto may not be transmitted. If one or more operating parameters are out of range, the part of the physical data relating to the problem may be transmitted. The system uses fixed pre and post filters which can respond to only a limited number of problems.

U.S. Patent No. 5,057,866 to Hill, Jr. et al. discloses a technique for monitoring machine status conditions and initiating communication with a remote computer at a remote station. A RIC system may be employed to enable transfer of physical data to a remote site. The machine includes a calculator which inserts selected sensor and detector information into a model to determine if given machine operating thresholds are exceeded. If all threshold levels are normal, no action is taken. If thresholds are exceeded, the calculator initiates a diagnostic alert to the remote station. This alert is initiated internally from the machine. In response to the alert, the remote station responds and analyzes data related to the diagnostic alert to indicate corrective action. The remote station can change the mathematical model utilized by the calculator to determine alert conditions.

The trend is for more machines to incorporate the RIC features. There also is a trend for newer machines with more sophisticated controls systems to contain larger amounts of NVM data. Further, call-in frequency is likely to increase, raising the likelihood of identifying a potential problem before it becomes manifest to the customer. These and other trends all combine to place a substantial burden on the RIC remote servers to handle a tremendous amount of data. A large amount of this data is not critical to the immediate problems at hand. Handling and storing of all of this data is expensive, increases the chance of error, and increases the amount of time both the local machine and the remote server are unavailable.

Thus, there is a need for enabling an appropriate amount of data to be sent to the remote server. Additionally, there is the need for the ability to initially process only a limited amount of data representing a summary of machine performance and query the machine for additional information relating to specific problem areas based on analysis of the summary data.

Additionally, there is the need for a remote site to be able to accurately determine the precise existence and cause of a problem with a remote machine to 1) determine if a service call is needed; and 2) prepare the service technician, from a remote location, to determine the cause of a problem so that any replacement parts or procedures that may be necessary to fix the problem are determined prior to the service technician leaving the central facility. This saves time and expense for the customer and the service technician.

With machines, such as reprographic machines, ever increasing in complexity and diversity, the amount of data necessary to diagnose problems is increasing. There is a need for communication with the remote server to be more time efficient.

It is an object of the present invention to enable some, at least, of those needs to be met.

The present invention provides a system in which a machine being remotely monitored has diagnostic means for selectively providing a data summary of key performance parameters and transmitting the data summary to a remote server. The remote server analyzes the data summary and can query for more specific non-volatile memory data in specific areas if the remote server determines that further information is needed to complete the diagnostics. The remote server only requests data relating to a specific area in question to reduce the amount of non-volatile memory data being transmitted and processed. The system involves interaction between low level diagnostic software associated with the machine and high level diagnostic software located at the remote site.
The low level and high level software cooperate to share the entire diagnostic process by utilizing specific capabilities at the machine site to perform initial diagnostic analysis of machine operation by generating a data summary of key operating parameters. The high level software receives this data summary and can further process the data summary to diagnose the operating condition of a machine utilizing higher level diagnostics.

More particularly, the present invention provides a system for collecting and transmitting physical data relating to the operation of a machine to a remote site for monitoring and analyzing machine operation, said system comprising plural operating components within said machine; control software associated with said machine for operating said components; data collection means for periodically accumulating physical data relating to the operation of said machine, said physical data including at least event data and crash data; memory associated with said machine for storing said control software and said physical data; non-volatile memory means associated with said machine for permanently storing optimum operating parameters for said machine; first diagnostic software at said machine for analyzing and processing said physical data to obtain a data summary of key operating parameters which define the overall operating status of said machine, said data summary containing only a substantially small portion of all physical data; a communication channel coupling said machine to a remote site; data transfer means for transmitting at least said data summary containing key parameters of said physical data over said communication channel to said remote site; second diagnostic software at said remote site capable of more advanced diagnostic analysis of said data summary than said first diagnostic software of said machine; query means for initiating bidirectional communication with said first diagnostic software through said communication channel, said query means querying requests for further specific physical data regarding parameters analyzed as abnormal, said second diagnostic software utilizing said further specific physical data to further analyze and diagnose operation of said machine.

By way of example only, an embodiment of the invention will be described with reference to the following drawings wherein:
Fig. 1 shows an exemplary machine which is to be remotely monitored using a system/method in accordance with the present invention;
Fig. 2 shows memory and control portions of the machine shown in Fig. 1;
Fig. 3 shows a representation of the files and memory components stored within the machine shown in Fig. 1;
Fig. 4 shows a Remote Interactive Communications (RIC) system in accordance with the present invention;
Fig. 5 shows a diagrammatic overview of the overall process of the RIC system shown in Fig. 4;
Fig. 6 shows a flow chart of the process steps taken by the RIC system of Fig. 4 to evaluate remote machine condition; and
Fig. 7 shows a diagram of data analysis and local monitoring steps of a process in accordance with the present invention.

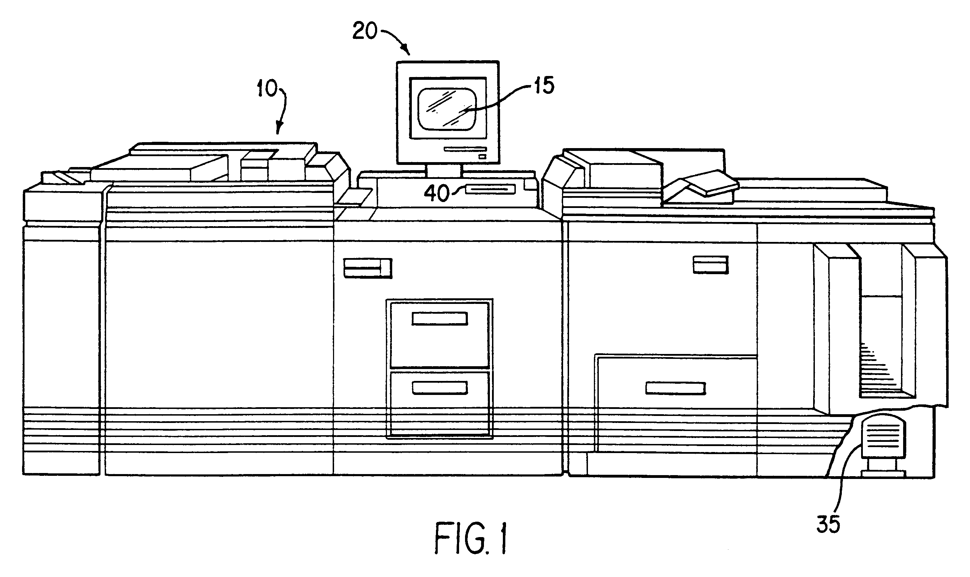

A typical electroreprographic machine which can be monitored, and on which remote diagnostics can be performed, through a Remote Interactive Communications (RIC) system is shown with reference to Fig. 1. The electroreprographic machine 10, which is complex and just one of a large plurality of diverse machines being monitored, includes a plurality of programmable components and subsystems which cooperate to carry out copying and printing jobs programmed through a touch dialogue screen 15 of a User Interface 20. The machine 10 includes a hard disk 35 and a floppy disk drive port 40. A detailed description of the basic features of exemplary electroreprographic machine 10 can be found in U.S. Patents Nos. 5,038,319 and 5,057,866.

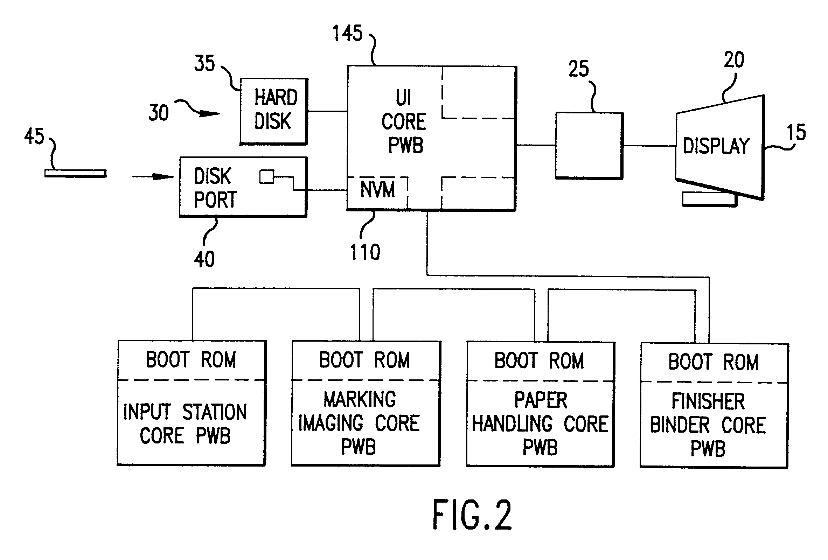

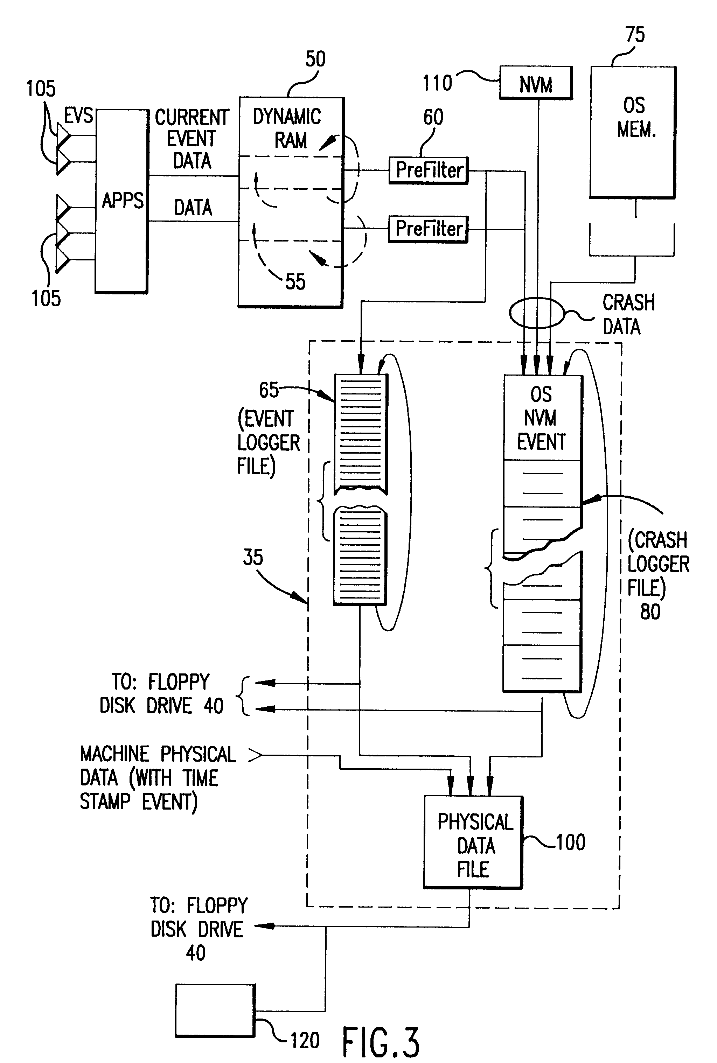

With reference to Figs. 2 and 3, operation of the various components of machine 10 is regulated by a control system 25 which uses operating software stored in memory 30, and in particular OS memory 75, to operate the components in an integrated fashion to produce copies and printed materials.

Memory 30 includes a main memory in the form of a hard disk 35. On machine power up, operating software is loaded from OS memory 75 into various UI core PWBs 145 (printed wiring boards). Hard disk 35 preferably comprises two platter, four head disks with a formatted capacity of approximately 20 megabytes. Additional ROM, RAM and NVM memory types are present at various locations within machine 10, each having a boot ROM for controlling downloading of operational software to the PWB, fault detection, etc. The boot ROM also enables transmission of operating software and control data to and from the PWBs via local buses.

Floppy disk port 40 provides program loading access to memory 30 for the purpose of entering changes to the operating software located in OS memory 75, loading specific programs such as diagnostic programs, retrieving stored data such as machine faults, etc. using floppy disks 45. Port 40 includes a suitable read/write head for reading and writing from and to disk 45 in the port 40. The floppy disk 45 preferably comprises a 3.5", dual density or high density micro disk having a formatted storage capacity of approximately 720 kilobytes or 1.4 megabytes, respectively.

Certain key machine operating events which define the proper execution of the control system 25 such as user interface buttons being set, changes in application software, operating states, interlock switches opening and closing, notification of control or system faults, execution of key routines, etc., are input as they occur by the applications software through occurrence logger software to a dynamic memory 50. Dynamic memory 50, which is RAM type, provides a circular buffer 55 of a predetermined size for storing current event data.

A data transfer means in the form of an event spooler routine in software periodically writes the current event data accumulated in buffer 55 of RAM 50 into an event or occurrence logger file 65 on hard disk 35. Typically, the event spooling routine is repeated on a given cycle, i.e., after a preset number of machine pitches. When called, the event spooling routine overwrites a portion of the previous event data stored in the event logger file 65 with the current event data, effectively erasing the previously oldest portion of the data and replacing it with the newer data. The event logger file 65 is connected to a physical data file which from time to time obtains and stores all or portions of the information within event logger file 65.

On each software crash, a snapshot of certain predetermined events (crash data) is taken within machine 10 at the time of the crash. This data can consist of operating software memory maps, boot ROMs, an image of non-volatile memory 110, and a snapshot of the current event data in buffer 55. The crash data for each crash is stored in block form in crash logger file 80 on rigid disk 35. The crash logger file 80 is a circular queue of crash files. When the crash logger file is filled, the next crash file overwrites the oldest crash file. The crash logger file can be accessed and downloaded to floppy disk port 40 and is connected to physical data file 100 which from time to time obtains and stores all or portions of the crash logger file 80.

Data contained in buffer 55 can be sent through an optional prefilter 60 prior to storage in event logger file 65 or crash logger file 80. The prefilter 60 can filter out predetermined unnecessary data from being entered and stored within files 65 and 80.

Certain machine parameters such as photoreceptor belt charge levels, fuser temperature, etc. are permanently stored in NVM 110. These parameters represent the optimum or ideal operating settings for the machine which will result in the best possible machine performance. Typically, these operating parameters provide an operating range or window. Suitable sensors 105 such as an Electrostatic Voltmeter (ESV) for sensing photoreceptor charge levels, sheet jam detectors, etc. monitor actual operating conditions of various subsystems within machine 10. At discrete times during operating cycles of the machine 10, the sensors 105 are read and the data obtained are input via a line to RAM 50 and ultimately, portions or all of this data ends up being stored in machine physical data file 100. Preferably, a time and date stamp is inserted with the data within physical data file 100 to identify when the event occurred.

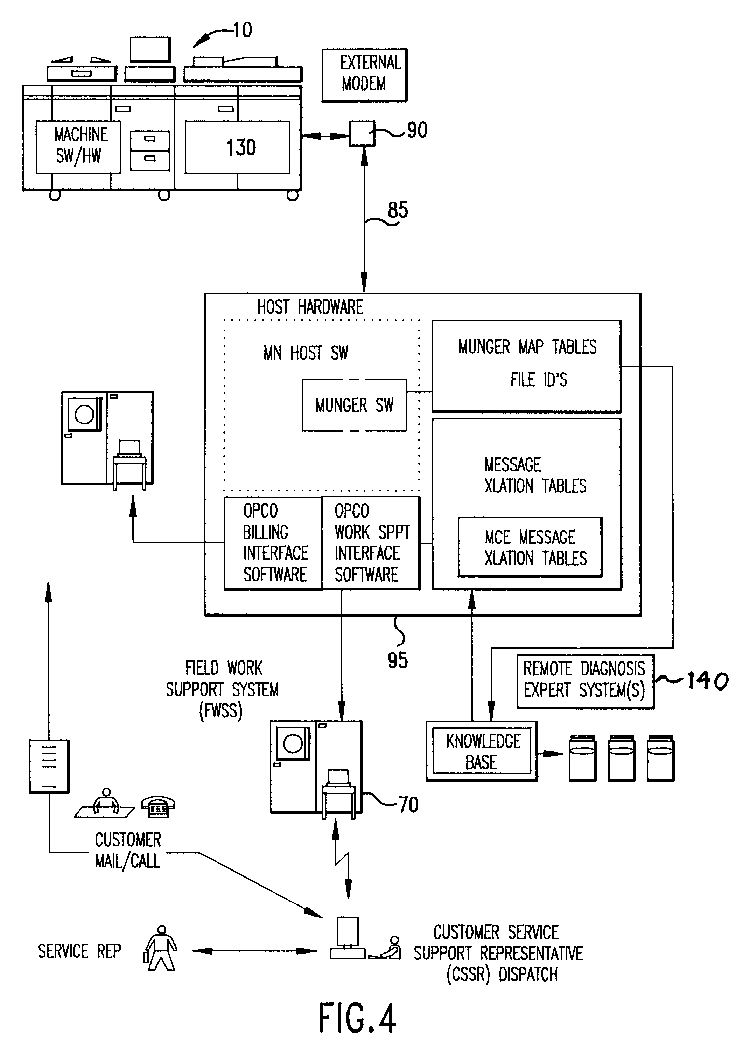

With reference to Fig. 4, the machine 10 is connected to a Remote Interactive Communications (RIC) system to enable the transfer of selected machine operation data to a remote site 70, through a suitable communications channel 85, typified by a telephone line. Machine physical data 100, which can include all data relating to the machine 10 such as data from event logger file 65, crash logger file 80 or other data that may be stored in other locations within machine 10, may be transmitted to remote site 70 automatically or in response to a specific request from the remote site 70. The remote site 70 has conventional software for converting the event data to ASCII format for further study and analysis or display on a display screen.

A communications modem 90 is provided for machine 10 at the machine site, the modem 90 serving to connect the machine 10 to the remote site 70 through the communications channel 85 for transmittal of physical machine data 100 from the machine to the remote site. A remote server 95 with a suitable input such as a keyboard is provided at the remote site 70 for use in establishing communications with the modem 90 for transmission of data from machine 10 to remote site 70 A suitable data bandwidth converter converts the machine data to the clock rate required for transmission over communications channel 85.

Since the data transmission bandwidth is limited, transmission costs are high, and processing time is crucial if a large number of machines 10 need to be analyzed by the remote server 95, it is desirable to limit the amount of data being transmitted. For this, preliminary diagnostic software 120 is provided (Fig. 3) Diagnostic software 120 dynamically performs preliminary diagnosis of the physical data 100 and compiles a data summary 130 (Fig. 4) which represents key parameters of the physical data 100 useful in further analysis of the operation of machine 10 by remote server 95 at remote site 70. This data summary 130 greatly limits the amount of data to be transferred, thus reducing transmission costs and reducing processing time at remote site 70. The data summary would include an overall fault count and fault rate for the system as well as a fault count and fault summary by subsystem. The subsystem data will be used to help isolate which areas merit further analysis. The summary could also include information pertaining to the machine usage so as to provide some context for the fault analysis.

The remote server 95 is responsible for monitoring and diagnosing a large number, on the order of thousands, of machines. The remote site 70 in addition to remote server 95 can include a customer service support representative dispatcher and a large database contained in memory which can contain the data summaries 130 of all machines for a long period of time (life of machine) or may contain a recent history of each machine if memory restraints are imposed.

The diagnostic software 120 of the machine 10 is provided with some level of on-board "intelligence" which monitors and partially digests machine sensor data and NVM, converting it to a description of the machine's current state, i.e., data summary 130. This on-board intelligence is a data pre-processor which provides an initial level of abstraction to the data in preparation for the inferencing process which is performed by the remote server. This data pre-processor will convert low-level machine data into linguistic labels which are descriptive. For example, a series of sensor readings which represent the time it takes for paper to arrive at a given physical location in the machine can be summarized and characterized by a statement such as "sheets are arriving slightly late at sensor S3". The criteria for "slightly late" are changeable and new values can be downloaded from the remote server as appropriate. The scheme involves utilizing computational resources within the machine 10 to generate a performance data summary, which essentially reduces the NVM data to a set of key performance parameters which represent enough of the significant information about the current state of the machine 10 that the remote server 95 could use the summary to determine whether anything in the machine 10 appeared out of the ordinary and required further investigation. This is highly beneficial since most often the machine 10 is running normal and no intervention or repair is needed. This can substantially reduce the amount of processing time needed to evaluate the machine 10 and requires less time and expense to transmit the data to the remote server 95. This can substantially reduces the amount of NVM data necessary to be stored by the remote server 95. Considering that a large number of machines 10 may be connected to the remote server 95, the amount of reduced data storage necessary for each machine 10 results in a very large reduction of memory needed by the remote server 95.

As a non-limiting example, the diagnostic software 120 may process all of the physical data 100 and compresses the data to a limited number of parameters which sufficiently reflect the operation of the machine for a given time period. This limited number of parameters forms the data summary 130 and can include a parameter for each component or subsystem of machine 10, to indicate if each particular component is operating normal, outside of a window of operation, or other condition. Other parameters may be present which represent the latest crash data or a time at which a crash or other fault occurred. In a best mode embodiment, the overall summary would provide a fault count, a fault rate, a fault distribution by subsystem and a list of all fault occurences above a pre-designated severity level.

This data summary 130 can be utilized by further higher level diagnostic software 140 at the remote site 70 associated with remote server 95 to further analyze the operation of machine 10. The higher level diagnostic software 140 may be an expert system which can use this description or data summary of machine operation to determine optimal operating setpoints given current global conditions on machine 10, transmit recommended changes back to the machine 10, or request additional informational data from machine 10 through diagnostic software 120. Thus, there is a high level of interaction between diagnostic software 120 at the machine 10 and diagnostic software 140 at the remote site. If, for example, the data summary shows a large number of faults in one particular machine area, the remote server will request more detailed information about the performance in that area as well as any other information that might pertain to faults that are suspected. Impending out-of-range conditions can be detected and converted to RIC alerts to alert service representatives of an impending condition. The remote server 95 can alert an operator at the Customer Service Support Dispatch shown in Fig. 4. The operator can access machine history information from the remote server 95 to better understand what might be wrong with the machine. Optionally, the remote server after analyzing and diagnosing machine 10 can send predictive corrective action information to the dispatch such that a service representative can readily know what the problem is and the best approach to solving the problem without leaving the service representative office. The service representative can then be prepared for the problem and arrive on sight with forehand knowledge of corrective action or alternatively can take corrective action of some problems by inputing corrective parameter changes to the remote server 95 which needs these corrective parameter changes to diagnostic software 120 for implementing corrective action remotely. Alternatively, upon determination of corrective action by the remote server 95, remote server 95 may automatically correct or change machine parameters.

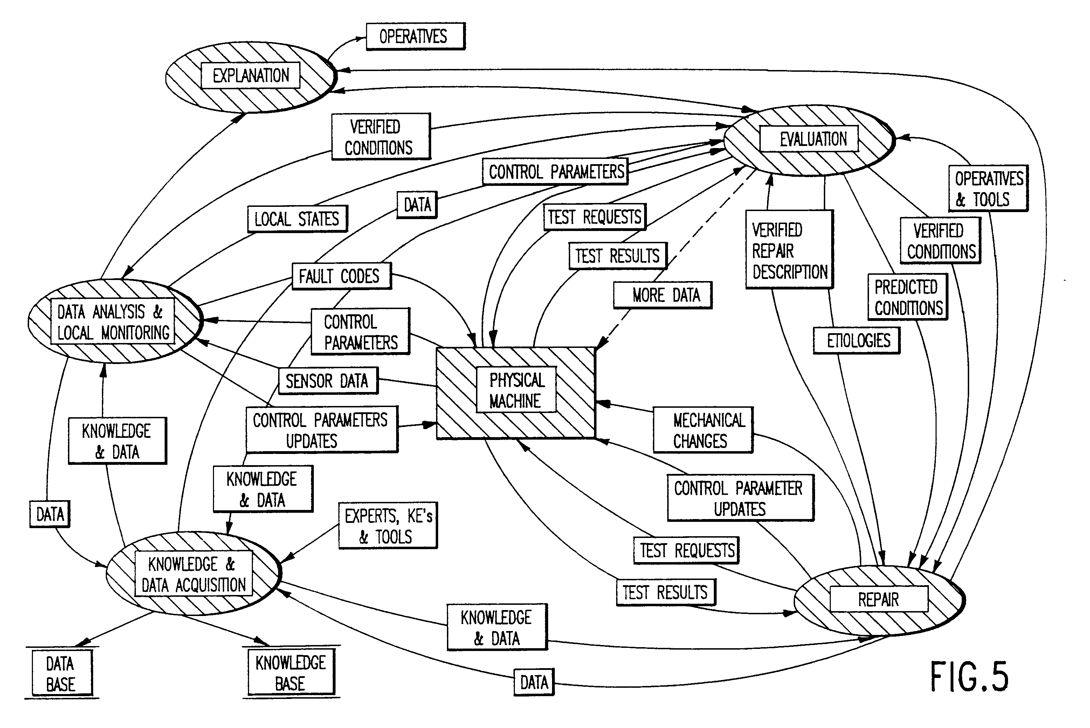

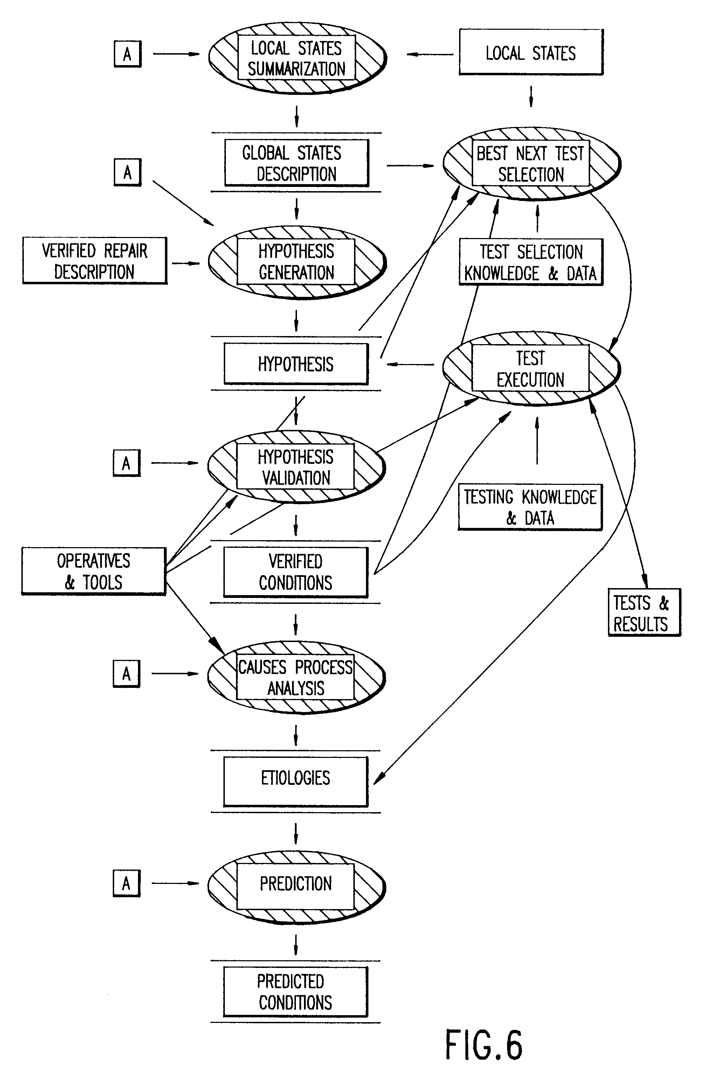

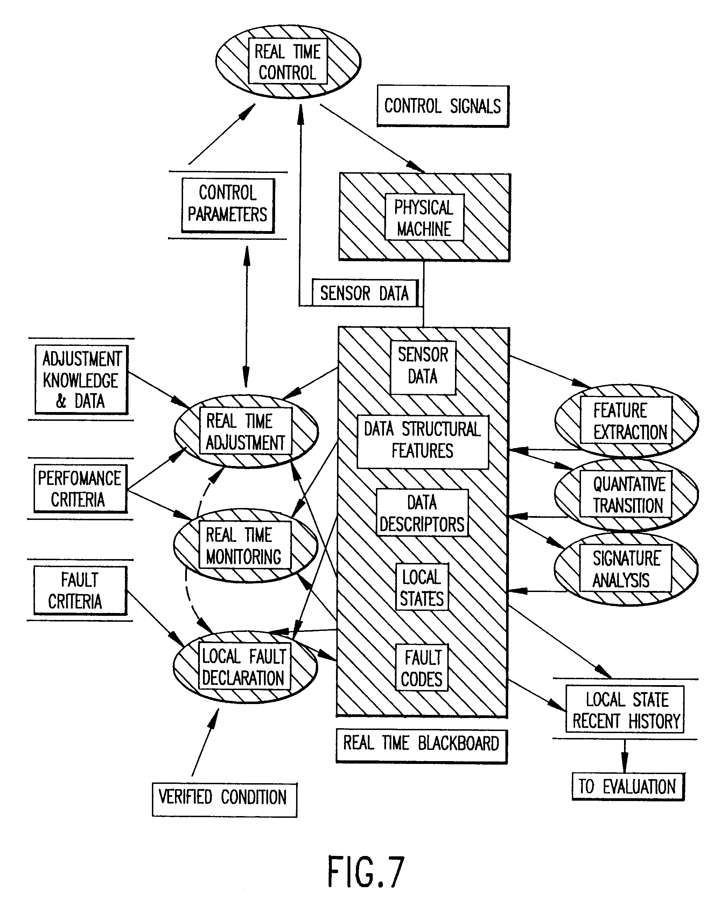

Figs. 5-7 show various flow charts representing the process flow and evaluation of machines by the RIC system. In particular, Fig. 5 shows a process overview of the various interactions between machine 10, local monitoring by control software 120, process flow through remote server 95 and the expert system at the remote site 70 including an expert system database, and interaction between the remote server and a repair dispatch facility as well as with the machine itself to diagnose and correct machine operation. The various process elements of knowledge acquisition, data analysis, monitoring, evaluation, repair and explanation are combined to form a system which effectively surrounds the machine with multiple levels of automated maintenance.

The data summary 130 is evaluated through the use of criteria which can change over time to reflect long term trends in the machine's performance. These criteria are applied to all parameters contained in the summary and used to determine, one functional area of the machine 10 at a time, if the machine's performance is meeting expectations. If a given parameter is outside of a current window of expectation, the remote server 95 then can utilize the two-way communication capability to query the machine 10 through software 120 for more detail (in the form of more specific NVM) pertaining to the specific functional area in question. This reduces the amount of NVM data transmitted down to a minimum and reduces the processing burden on the remote server 95. In the case where the machine 10 is functioning normally, which most often is the case, the remote server 95 would deduce this from the data summary 130 and the transmission of data from the machine 10 to the remote server 95 would be completed very quickly. Since only a limited amount of the total physical data 100 is transmitted, i.e., data summary 130, the remote server 95 does not have as much data to process, requires less storage and can free up the remote server 95 faster to handle monitoring and diagnosis of a larger number of complex machines 10.

The user of machine 10 would see a "machine adjusting" message on the user interface 20 while the machine 10 is transmitting the data summary 130 to the remote site 70 and while the expert system at the remote site 70 sends return messages indicating changes in operating conditions, windows, settings, or requests more informational data from machine 10 to complete analysis of machine operation.

The system is highly useful when monitoring machines having a large number of operating parameters and large physical data files. By utilizing different levels of intelligent diagnostic software at the machine and at the remote site, the monitoring and diagnostic system achieves a greater flexibility in handling a large number of machines and a great variety of machine types. Further, the interaction between software allows for efficient transfer of only the data necessary to analyze the machine.

The system allows retention of more detailed machine information in machine 10 which is provided with sufficient memory storage to store large amounts of physical data 100 from the machine 10, and having this information accessible by the remote server 95 if necessary to diagnose problems with machine 10 from remote site 70. This prevents unnecessary data from being processed and stored at remote site 70, resulting in increased processing capability and less storage requirements at the remote site 70 to handle a larger amount of machines 10. The system performs routine remote diagnostics on a machine by interfacing with the machine through appropriate communications to obtain a data summary report of diagnostics, this data summary report including only a partial amount of all of the diagnostic data accumulated by the machine. Through the interactive capability of the two software routines 120 and 140, in many cases the machine should be able to "explain" what is wrong by communicating with the expert system.

Additional advantages of the system are the ability to have software at each machine 10 be designed to diagnose and analyze a particular machine. This can accommodate a large variety of models, brands, and sizes of machines such as copiers, enabling the local software 120 to adapt to the specific requirements of the machine 10. All software 120 of the machines 10 can process the physical data 100 of each machine and form data summaries 130 which have a common format understandable by the remote server 95. This allows simplified software to be utilized by the remote server 95 at remote site 70 to provide analysis of the variety of machines being monitored. Since the embedded software located in the machines will pre-process the data, a common interface can be designed without respect to the multiplicity of machine models. The embedded pre-processors will reduce and simplify the data, while presenting the resulting summaries in a common format.

The remote server 95 once it has processed the data summary can determine whether machine 10 is operating normally (in which case no further action is necessary), determine whether an impending problem exists (in which case remote server 95 can communicate with the diagnostic software 120 at machine 10 to adjust or correct machine 10), or determine that an error or fault exists but more information is needed to isolate the problem (in which case the remote server 95 can query the diagnostic software 120 of machine 10 for further physical data 100 relating only to any parameters or conditions that may be useful in fully analyzing the problem. This eliminates processing of extraneous information and allows for interactive communication between the remote server's high level diagnostic software (expert system) 140 and the diagnostic software 120 at machine 10 to resolve the problem in a most efficient manner.

The diagnostic software 140 queries machine 10, through two-way communications channel 85, for additional informational data relating to specific criteria analyzed from the data summary 130 which will further aid in determining the operating condition of machine 10. The high level diagnostic software 140 only requests data relating to a specific area in question to reduce the amount of non-volatile memory data being transmitted and processed.

Preferably, the diagnostic system is provided with a knowledge-based adjustable window of expectation which allows facts relating to characteristics of the machine to be recorded by a change, leaving the system prepared to respond to new developments, while not responding to error conditions which have previously been found to exist. For example, consider a set of machine process elements responsible for transporting sheets to a given location at a given time, which have worn to the extent that the sheets are beginning to arrive late. After the initial alarm has been activated to notify the monitoring agent of this condition, the alarm threshold and the machine operating condition can be automatically adjusted to compensate for this condition, thus enabling the machine to continue to operate properly and requiring a higher degree of errant behavior before additional alarms are issued. Thus the knowledge of the late arrivals, leads to the expectation of late arrivals in the future which could imply that what were once considered normal arrivals could now be flagged as early. This collaboration between the diagnostic monitoring software and the self-adjusting machine control software is vital to maximize the utility of the diagnostic information being collected and to minimize the occurences of such procedural instabilities as multiple alarms resulting from the same condition.

To a limited extent, this can be included in the diagnostic software at the machine, such that the data summary only reflects changes in condition, and would not include data relating to conditions which are already known to exist. However, preferably, the remote server 95 is equipped with a knowledge-based system which can store prior histories of conditions, adjustments and responses which allow the remote server 95, which has an expanded level of diagnostic ability from that of software 120 of machine 10, to determine whether a condition was pre- existing and should be expected or whether the condition is new. This avoids having the remote server responding repeatedly to a condition until that condition can be resolved by adding an expectation criteria into the process of evaluation. If, for example, we know that a certain part in a given machine is near end of life and exhibits a certain characteristic behavior, once that fact has been registered, we would expect that behavior until something is changed. The change in expectation would be reflected by an adjustment in the criteria until such time that the part is replaced. This way, the system would respond to additional changes in the machine's performance without being bothered by something that it already knows. In this way, the remote server 95 through diagnostic software 140 learns knowledge about the state of the machine 10 over time.

Important advantages of such a knowledge-based system are the following: ability to reduce processing time by readily acknowledging that a condition was pre- existing and a complete diagnosis of this problem is not necessary; comparing the knowledge-based system for a similar data summary to quickly deduce an approach to solve the problem without reanalyzing similar or exact data; acknowledging that a pre-existing problem for which a solution or adjustment was earlier made still exists, and updating the knowledge system to attempt other solutions since the attempted solution appears to not overcome the problem; accumulating information relating to when components or subsystems are expected to reach a near end of use for parts having limited life expectancies to provide a likely cause for problems which occur near or at these values; ability to check problems on various similar machines to determine common problems and or adjustments, the correction of which can be dynamically changed at the remote site 70 so that any similar machine 10 can have its associated operating parameters adjusted to reflect the determined correction.

## Claims

1. A system for collecting and transmitting diagnostic physical data of a machine to a remote site for monitoring and analyzing machine operation, the machine having plural operating components, control software for operating said components, and a memory for storing said control software; the system comprising:
means for periodically collecting physical data relating to said machine in said memory;
a communication channel coupling said machine to said remote site;
non-volatile memory means for storing optimum operating parameters for said machine;
software control means for performing preliminary diagnostic analysis of said physical data stored in said memory to derive a data summary containing key diagnostic parameter data relating to operation of said machine, said key diagnostic parameter data comprising only a portion of all of said physical data;
data transfer means for transmitting said summary data over said communication channel to a remote site; and
a remote diagnosis expert system at said remote site for further diagnostic analysis of said transmitted data summary.

2. A system as claimed in claim 1, further comprising a memory at said remote site for storing at least a portion of said data summary to form a log.

3. A system as claimed in claim 1 or claim 2, further comprising a termination means for terminating communication with said machine if all parameters within said data summary are determined to be in a normal range.

4. A system as claimed in any one of the preceding claims, further comprising a query means for querying said software control means of said machine for transmission of more specific physical data relating to specific parameters determined not to be in a normal range.

5. A system as claimed in any one of claims 1 to 3, further comprising a query means for initiating bidirectional communication with said software control means through said communication channel, said query means querying requests for further specific physical data regarding parameters analyzed as abnormal, said expert system utilizing said further specific physical data to further analyze and diagnose operation of said machine.

6. A system as claimed in any one of the preceding claims, wherein the remote diagnosis expert system includes a knowledge base.

7. A method of monitoring and diagnosing operation of a machine from a remote site, the method comprising the steps of:
(a) periodically collecting physical data relating to operation of a machine and storing said physical data in a memory associated with said machine;
(b) performing preliminary diagnosis of said physical data by diagnostic software associated with said machine to derive a data summary of key parameters of said physical data;
(c) transmitting said data summary over a communication channel to the remote site;
(d) performing additional diagnostic analysis of said machine by analyzing said data summary using further diagnostic software to determine if said machine is operating within a normal range;
(e) querying said diagnostic software of said machine for further specific physical data if any parameters of said data summary are not in a normal range, said further specific physical data pertaining only to specific areas related to parameters of said data summary diagnosed as not in a normal range; and
(f) conducting more detailed diagnostic analysis based on said further specific physical data.

8. A method as claimed in claim 7, further comprising the step of predicting a corrective action to return said machine to a normal operation.

9. A method as claimed in claim 8, further comprising the step of automatically remotely adjusting said machine to return said machine to a normal operation.

10. A method as claimed in any one of claims 7 to 9, wherein step (b) includes converting said physical data into linguistic labels which describe said physical data.

11. A method as claimed in any one of claims 7 to 10, wherein step (b) derives said data summary in a common format which accommodates diagnostic analysis of a multiplicity of different machines.
